(19) Europäisches Patentamt
European Patent Office
Office européen des brevets

(11) **EP 1 861 676 B1**

(12) **FASCICULE DE BREVET EUROPEEN**

(45) Date de publication et mention
de la délivrance du brevet:
**04.06.2014 Bulletin 2014/23**

(21) Numéro de dépôt: **06708463.2**

(22) Date de dépôt: **23.02.2006**

(51) Int Cl.:
***F41G 7/22*** *(2006.01)*

(86) Numéro de dépôt international:
**PCT/EP2006/060201**

(87) Numéro de publication internationale:
**WO 2006/089923 (31.08.2006 Gazette 2006/35)**

(54) **DISPOSITIF DE CONTRE-MESURE ET DE POURSUITE D'UNE MENACE AVEC DISPOSITIF DE RETARD OPTIQUE**

GEGENMASSNAHMEVORRICHTUNG ZUR BEDROHUNGSVERFOLGUNG MIT OPTISCHER VERZÖGERUNGSVORRICHTUNG

DEVICE FOR COUNTERING AND TRACKING A THREAT WITH OPTICAL DELAY DEVICE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **23.02.2005 FR 0501834**

(43) Date de publication de la demande:
**05.12.2007 Bulletin 2007/49**

(73) Titulaire: **Sagem Défense Sécurité**
**92100 Boulogne-Billancourt (FR)**

(72) Inventeurs:
• **ARAGONES, Julien**
**F-92160 Antony (FR)**
• **ROBINEAU, Jacques**
**F-91620 La Ville Du Bois (FR)**

(74) Mandataire: **Regimbeau**
**20, rue de Chazelles**
**75847 Paris Cedex 17 (FR)**

(56) Documents cités:
FR-A- 2 535 467    FR-A- 2 821 929
US-A- 5 206 502    US-B1- 6 410 897

## Description

DOMAINE TECHNIQUE GENERAL

La présente invention concerne un dispositif amélioré de poursuite d'une menace et de contres mesures dirigées

Plus précisément, elle concerne un dispositif de poursuite et de contre mesure d'une menace sous la forme d'un missile à autodirecteur à infra rouge (ADIR).

ETAT DE L'ART

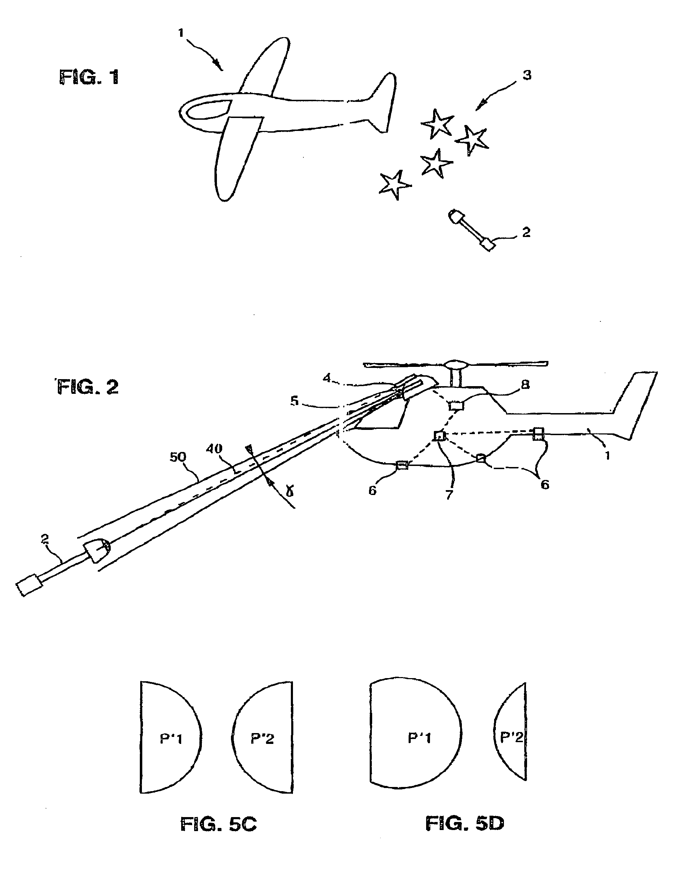

La figure 1 représente schématiquement un dispositif connu de contre-mesure pyrotechnique 3 protégeant par exemple un aéronef 1 d'une menace 2. La menace 2 se présente sous la forme d'un missile à autodirecteur à infrarouge (ADIR).

Le dispositif 3 est un leurre pyrotechnique générant des rayonnements infra rouge lorsqu'il est mis à feu hors de l'aéronef 1, quand ce dernier a détecté une menace. Le rayonnement infra rouge généré par le leurre 3, qui est plus intense que le rayonnement infra rouge généré par l'aéronef 1, engendre une déviation de la trajectoire de la menace. La menace se dirige vers le leurre 3 plutôt que vers l'aéronef 1.

Les dispositifs de leurre pyrotechnique comportent cependant des inconvénients.

Ils sont tout d'abord onéreux de conception. De plus, ils représentent un risque d'incendie à l'intérieur de l'aéronef en cas de dysfonctionnement. En outre, en cas de fausse alarme, ils compromettent fortement la furtivité de l'aéronef 1. Enfin, ils représentent des dispositifs consommables qu'il faut remplacer régulièrement et sont fortement spécialisés à un type de menace.

Par conséquent, les dispositifs actuels de contre-mesure sont généralement des brouilleurs par éclairement infrarouge.

La figure 2 représente schématiquement un dispositif connu de contre-mesure infrarouge directionnelle (DIRCM - « Directional InfraRed Counter-Measures »).

L'aéronef 1 comporte ainsi un dispositif de détection de départ de missiles (MWS - « Missile Warning System ») sous la forme d'une pluralité de détecteurs 6 montés sur la carlingue de l'aéronef 1. Les détecteurs 6 détectent le lancement d'un missile 2, poursuivent la trajectoire du missile et l'identifient comme une menace pour l'aéronef 1.

Un dispositif de contrôle 7 du dispositif de détection de départ transmet la trajectoire du missile 2 au dispositif de contrôle 8 d'un système de contre-mesure directionnelle.

Le système de contrôle 8 met alors en route le dispositif de poursuite 4 qui poursuit le missile et détermine sa direction dans l'espace. Le dispositif de poursuite 4 détecte l'autodirecteur du missile 2 par sa surface équivalente laser ou « SEL », qui est la valeur quantitative de l'effet « oeil de chat ». A cet effet, le dispositif de poursuite 4 émet un faisceau de lumière 40 de poursuite en direction de l'autodirecteur du missile 2 et mesure l'écho réfléchi pour mesurer la SEL de la « tête chercheuse »,

Le dispositif de contrôle 8 dirige également un faisceau de lumière 50 de brouillage ayant une ouverture angulaire $\gamma$ produit par une source de lumière infrarouge 5. La source lumineuse 5 utilise généralement des lampes infrarouges à décharges, dont le spectre a des longueurs d'onde couvrant un large domaine spectral, depuis le visible jusqu'à l'infra rouge lointain. Une fois que la poursuite est correctement effectuée et que le missile est bien dans le faisceau de la source lumineuse 5, l'éclairement infrarouge 50 est envoyé vers l'autodirecteur du missile 2 selon une séquence spécifique afin d'effectuer un brouillage du missile 2, de sorte qu'il ne représente plus une menace pour l'aéronef 1.

Les sources lumineuses 5 à décharges présentent de nombreux inconvénients.

De par l'étalement de la source lumineuse, la concentration du faisceau requiert un dispositif optique volumineux (grande pupille, grande focale) qui est très encombrant et lourd. Les brouilleurs à base de lampe à décharges sont donc difficilement embarquables à bord des aéronefs. De plus, la puissance lumineuse disponible n'est pas très importante, ce qui limite fortement l'efficacité de tels brouilleurs utilisant des lampes à décharges.

Ainsi, avec l'évolution de la technologie, il est maintenant possible d'obtenir des sources laser infrarouges émettant des longueurs d'onde comprises entre 3 et 5 micromètres. Cette évolution de la technologie permet de prévoir une amélioration intéressante des dispositifs de poursuite et de contre-mesure. En effet, avec une source laser, il est possible d'augmenter sensiblement la brillance du faisceau 50 et/ou 40 avec une source bien plus petite qu'une source à décharge et plus proche de la limite de diffraction. Du fait que la source laser est une source cohérente, toute l'énergie du faisceau est concentrée sur une seule longueur d'onde.

L'augmentation de la puissance du faisceau sur une ou plusieurs longueurs d'onde données présente des avantages.

Un faisceau laser permet de déposer un éclairement plus important que celui des lampes à décharges en entrée de pupille de l'autodirecteur de la menace.

L'énergie laser peut être contenue dans plusieurs raies (typiquement deux ou trois) pour pouvoir éclairer efficacement tous les types d'autodirecteurs de missiles.

Du fait de sa haute brillance (faisceau proche de la diffraction) un faisceau laser peut être collimaté avec un dispositif optique de petite taille, ce qui le rend facilement embarquable, tout en assurant un bilan de portée acceptable pour les fonctions de poursuite active, d'identification AD et de brouillage du DIRCM.

Un faisceau laser peut être réfléchi dans une plus grande mesure par la « tête chercheuse », de sorte que l'identification du missile 2 - notamment par la modulation qu'il introduit sur le faisceau laser réfléchi - est facilitée. Une bonne identification de la menace 2 permet d'envoyer un bon code de brouillage, c'est à dire un code vraiment adapté au type de missile 2. La source est très directive, ce qui augmente la furtivité générale de l'aéronef. Un tel système est divulgué dans FR 2535467.

Les dispositifs de poursuite et de contre-mesure utilisant une source laser présentent cependant des inconvénients.

Du fait de l'étroitesse du rayon laser produit par la source laser (en général moins de 1 milliradian), le dispositif de poursuite 4 doit être capable de poursuivre très précisément le détecteur infrarouge du missile 2.

De plus, la caractéristique de cohérence des sources laser impose l'utilisation d'un dispositif de mise en forme, d'orientation et de stabilisation de faisceau qui ne génère pas d'interférences qui auraient des conséquences néfastes sur le fonctionnement général du système et particulièrement sur l'efficacité de brouillage de l'autodirecteur du missile.

Il est donc très difficile de concevoir un dispositif de poursuite et de contre-mesure qui puisse suivre rapidement et simplement le missile dans le cas de l'utilisation d'une source infrarouge laser.

PRESENTATION DE L'INVENTION

L'invention propose de pallier au moins un de ces inconvénients.

A cet effet, l'invention propose un dispositif de contre-mesure et de poursuite d'une menace sous la forme d'un missile à autodirecteur infrarouge, comportant une tête d'orientation apte à recevoir un faisceau lumineux cohérent incident et à le dévier pour produire un faisceau transmis, caractérisé en ce que la tête d'orientation comporte un biprisme divisant le faisceau transmis en deux sous faisceaux, le biprisme étant associé à un dispositif de retard optique introduisant une différence de chemin optique entre les deux sous faisceaux supérieure à la longueur de cohérence du faisceau incident.

L'invention est avantageusement complétée par les caractéristiques suivantes, prises seules ou en une quelconque de leur combinaison techniquement possible :

- le biprisme est monté en rotation en site autour d'un axe perpendiculaire à sa base et passant par son centre géométrique ;
- la tête est montée en rotation en gisement autour d'un axe parallèle à la base du biprisme et passant par le centre géométrique du biprisme ;
- le dispositif de retard comporte une lame optique ;
- la lame est montée sur un support mobile sur une glissière, le dispositif comportant des moyens de déplacement aptes à déplacer le support de la lame sur la glissière en fonction d'une position angulaire du biprisme :

- les moyens de déplacement comportent une patte reliée d'une part à une liaison avec un support du biprisme et d'autre part à une liaison avec le support de la lame ;
- les moyens de déplacement comportent un moteur d'entraînement du support de la lame sur la glissière ;
- la lame est inclinée sur son support ;
- la lame et les moyens de déplacements sont équilibrés statiquement de manière à éviter une déstabilisation angulaire de la ligne de visée pendant les phases de poursuite sous une excitation linéaire de la tête d'orientation de faisceau ;
- le biprisme est monté sur un support mobile en rotation autour de l'axe de rotation en site dans une fourche ;
- un capot de protection du biprisme est monté mobile en rotation en gisement ;
- le dispositif comporte une source laser infrarouge de longueur de cohérence de l'ordre de grandeur du centimètre.

L'invention présente de nombreux avantages.

Les dispositifs 4 de poursuite et 5 de contre-mesure de l'art antérieur peuvent être fusionnés dans l'invention. Avec une seule source laser, on peut effectuer la poursuite et la contre-mesure, grâce à la puissance du faisceau. La source lumineuse est unique et de petite dimension. Un dispositif selon l'invention est très compact, ce qui augmente la furtivité du dispositif et de l'ensemble sur lequel il est monté.

L'invention résout le problème d'interférences dues à l'utilisation conjointe d'une source lumineuse cohérente et d'une tête d'orientation comportant un biprisme générant des chemins optiques différents pour des rayons d'un faisceau laser le traversant. La tête d'orientation est compatible avec des sources laser à faible longueur de cohérence (typiquement quelques centimètres).

La tête d'orientation engendre très peu de pertes de puissance laser.

La tête d'orientation est très simple de réalisation et d'utilisation. Il y a peu ou pas de réglages nécessaires.

Elle ne comporte pas d'angle mort, et permet notamment une visée zénithale. Elle couvre un espace d'orientation au moins égal à $2\pi$ stéradians.

De plus, la disposition mécanique de la tête d'orientation est symétrique autour de ses axes d'utilisation. Le centre de gravité de la tête est donc situé sur les axes d'utilisation. La tête peut donc davantage être insensible aux vibrations d'une structure sur laquelle est elle montée. La tête n'engendre pas elle-même de vibrations ni de déstabilisation de la ligne de visée.

Enfin, le déplacement de la tête est très rapide grâce à des inerties réduites et une motorisation appropriée.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1, déjà commentée, représente schématiquement un dispositif connu de contre-mesure pyrotechnique ;
- la figure 2, déjà commentée, représente un dispositif connu de l'art antérieur permettant la poursuite d'une part et la contre-mesure d'autre part d'une menace sous la forme d'un missile à autodirecteur à infrarouge ;
- les figures 3A et 3B représentent schématiquement le trajet de rayons optiques à l'intérieur d'une tête d'orientation selon l'invention ;
- la figure 4 représente schématiquement la génération d'une différence de marche entre deux rayons optiques traversant une tête d'orientation selon l'invention ;
- les figures 5A et 5B représentent les sous pupilles dans les orientations de la tête correspondant aux figures 3A et 3B ;
- les figures 5C et 5D représentent respectivement les pupilles de sortie dans les orientations de la tête correspondant aux figures 3A et 3B respectivement ;
- la figure 6 représente schématiquement une vue en coupe d'un mode de réalisation possible d'une tête d'orientation selon l'invention ;
- la figure 7 représente schématiquement une vue en perspective et en éclaté d'un mode de réalisation d'une tête d'orientation selon l'invention ; et
- la figure 8 représente schématiquement le montage de deux dispositifs de poursuite et de contre-mesure selon l'invention sur un aéronef 1.

Sur l'ensemble des figures, les éléments similaires portent des références numériques identiques.

DESCRIPTION DETAILLEE

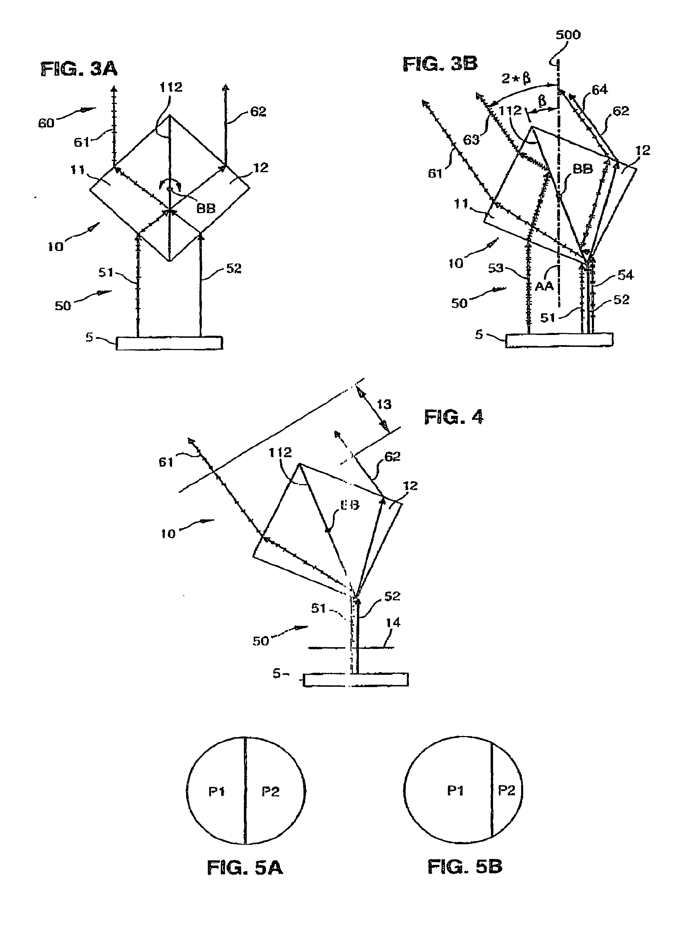

Les figures 3A et 3B montrent qu'un dispositif amélioré de contre-mesure et de poursuite d'une menace selon l'invention comporte une tête d'orientation d'un faisceau laser incident 50 issu d'une source laser 5.

Dans la suite de la présente description, on présente pour des raisons de clarté un seul sens de trajet des rayons lumineux. D'après le principe de retour inverse de la lumière, on comprend que les rayons peuvent se déplacer dans le sens inverse de celui présenté, et que la tête d'orientation peut donc servir à la fois à la poursuite et à la contre-mesure de la menace.

La source laser 5 est préférentiellement une source laser infra rouge. Avantageusement, la source laser 5 est à faible longueur de cohérence (typiquement de l'ordre du centimètre).

La tête d'orientation est apte à recevoir le faisceau 50 lumineux incident et à le dévier pour produire un faisceau 60 transmis.

A cet effet, la tête comporte principalement deux prismes 11 et 12 formant un biprisme 10. Les prismes 11 et 12 sont très préférentiellement rectangles et isocèles. Ils sont accolés l'un à l'autre sur une face 112 issue de l'hypoténuse de leur base formant triangle rectangle. Le biprisme 10 forme donc un cube.

La face 112 sépare le biprisme 10 en deux parties égales et forme un dioptre réfléchissant les rayons du faisceau laser 50 incident puis passant dans les prismes 11 et 12. La figure 3A montre le trajet de deux rayons incidents 51 et 52 dans le biprisme 10. On constate que les rayons 51 et 52 sont réfléchis totalement par la face 112. Les rayons 51 et 52 sont transmis et référencés par 61 et 62 respectivement après le biprisme 10.

Le biprisme 10 est monté en rotation autour d'un axe de rotation BB perpendiculaire à la base du biprisme, à savoir perpendiculaire au plan des figures 3A et 3B, et passant par le centre géométrique du biprisme. L'axe BB permet la rotation du biprisme 10 dans le plan des figures 3A et 3B, et donc l'orientation du faisceau 60 en site.

La figure 3B montre qu'une rotation d'un angle $\beta$ du biprisme autour de l'axe BB permet une rotation du faisceau transmis 60 d'un angle de $2\beta$. La figure 3B montre à cet effet le trajet de quatre rayons, les rayons 61, 62, 63 et 64 étant les rayons transmis. Avec une rotation du biprisme 10 d'une valeur d'au moins 45" de chaque côté de l'axe optique 500, la tête peut couvrir un angle en site au moins égal à 180°.

La figure 4 montre que la rotation du biprisme 10 autour de l'axe BB entraîne une avance de phase due à la différence 13 de marche optique entre les deux rayons 61 et 62 transmis par les prismes 11 et 12 respectivement. La différence de marche 13 est comptée par rapport à la référence de phase 14 en amont du biprisme 10 sur les rayons incidents 51 et 52.

Par ailleurs, les figures 5A à 5D montrent que le biprisme divise le faisceau 60 transmis en deux sous faisceaux. La pupille de sortie du dispositif de contre-mesure est scindée en deux parties, l'une passant dans le prisme 11 (pupille P1), l'autre passant dans le prisme 12 (pupille P2). Les figures 5A et 5C correspondent à la situation de la figure 3A, les figures 5B et 5D correspondent à la situation de la figure 3B. Les figures 5A et 5B montrent ainsi que les deux sous pupilles entrantes P1 et P2 varient en fonction notamment de l'angle d'orientation $\beta$ du biprisme 10. Les figures 5C et 5D montrent que chaque prisme a pour effet d'inverser la pupille et de la décaler, de manière différente pour chaque angle d'incidence induisant une modification du sens des sous pupilles P'1 et P'2 de sortie.

La différence de marche 13 induit des interférences entre les rayons 61 et 62. De telles interférences sont très gênantes pour la poursuite et la contre-mesure des menaces. Les zones sombres des interférences peuvent en effet conduire à des zones de non détection de la menace et/ou à des zones de non brouillage. De plus, le fait que la différence de marche varie lors de l'utilisation de la tête, notamment en fonction de l'angle d'orientation du biprisme, rend encore la poursuite et la contre-mesure des menaces plus délicates.

Par conséquent, il faut rendre les deux sous parties du faisceau 60 incohérentes entres elles de façon à éviter les interférences entre les rayons sortant du biprisme.

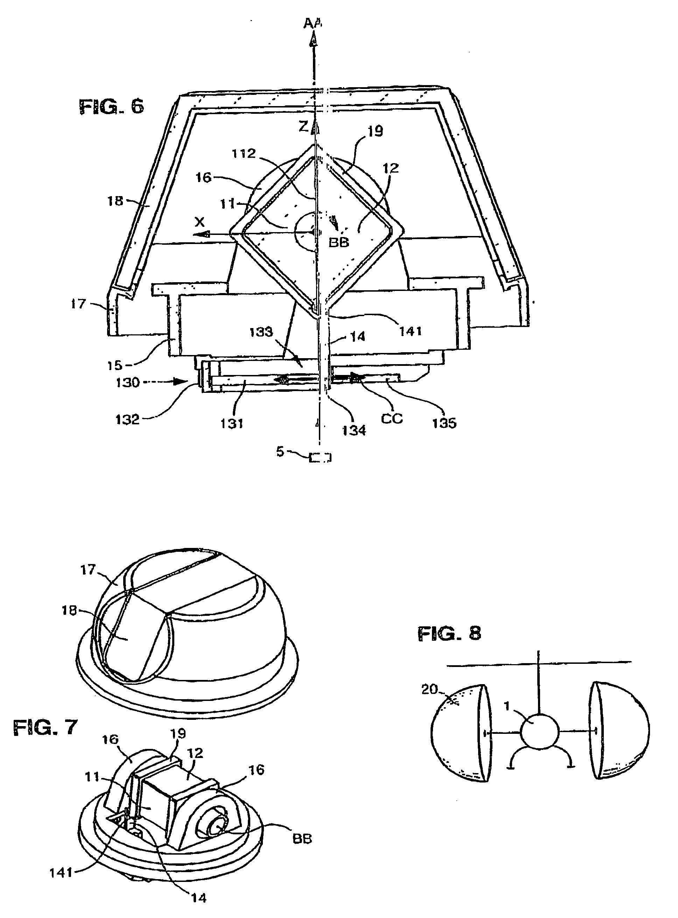

Pour cela, la figure 6 montre que la tête d'orientation comporte un dispositif de retard 130 permettant de rendre les deux sous parties du faisceau 60 incohérentes entres elles.

Avantageusement, le dispositif 130 comporte une lame optique 131 devant l'un des deux sous faisceaux. Le retard de chemin optique introduit par la lame 131 est au moins supérieure à la longueur de cohérence de la source laser 5 dans toutes les positions utiles du bi-prisme.

La lame 131 de retard est choisie de manière à satisfaire plusieurs besoins.

Premièrement, l'épaisseur de la lame doit être suffisante pour assurer l'incohérence des deux sous faisceaux à tous les angles d'utilisation de la tête. Elle induit sur un seul sous faisceau un supplément de chemin optique supérieur à la somme d'une part de la longueur de cohérence de la source laser et d'autre part de l'avance de chemin optique entre les deux pupilles. La valeur du supplément de chemin optique induit par la lame 131 est supérieure à ladite somme dans le pire cas d'utilisation de la tête. De cette manière, l'incohérence des deux sous faisceaux en sortie de tête d'orientation est assurée, quelle que soit fa position angulaire du faisceau transmis défléchi.

Deuxièmement, la lame doit assurer de faibles pertes d'énergie optique dues à la traversée du matériau dans la bande spectrale d'utilisation de la source laser. La lame 131 doit par conséquent être relativement fine.

Troisièmement, la lame doit être traitée antireflet. Le traitement antireflet permet une furtivité du dispositif de contre-mesure et de poursuite. Il permet également de limiter les pertes d'énergie optique dues à la réflexion sur les parois de la lame en entrée du dispositif.

Quatrièmement, la lame doit être montée légèrement inclinée de manière à ne pas générer de réflexion spéculaire dans la direction incidente pour éviter :

- premièrement, des réflexions parasites de la source laser à l'intérieur du dispositif DIRCM qui réduiraient l'efficacité de la poursuite et du brouillage ;
- deuxièmement, une détectabilité potentielle par effet « oeil-de-chat » en générant une SEL non négligeable.

On rappelle que préférentiellement la source laser présente une faible longueur de cohérence, typiquement égale à quelques centimètres.

Par conséquent, si on appelle L l'épaisseur de la lame 131 et n l'indice de réfraction du matériau dans lequel est fabriqué la lame, il faut que :

$$(L \times n - L) \geq L_c$$

où $L_c$ est la longueur de cohérence de la source laser.

Si on prend des matériaux à fort indice de réfraction, comme par exemple le silicium qui a un indice de l'ordre de 3,4, alors on obtient que : $L \geq \dfrac{L_c}{2,4}$.

soit $L \geq 8,3 mm$ pour une longueur de cohérence de la source 5 égale à 20 mm. On constate donc que la lame est peu encombrante.

D'autres modes de réalisation du dispositif de retard optique 130 sont également possibles. Ils peuvent notamment présenter des miroirs introduisant une différence de marche optique entre les sous faisceaux. Ces modes de réalisation sont cependant plus complexes à réaliser et moins compacts.

Les développements qui précèdent décrivent l'orientation de la tête en site. Pour pouvoir couvrir un espace angulaire au moins de $2\pi$ stéradians, il faut disposer un autre axe de rotation de la tête.

Les figures 3 et 6 montrent que préférentiellement, un axe d'entrée du système est parallèle à la base du biprisme 10. L'axe d'entrée est confondu avec un axe de rotation AA passant par le centre géométrique du biprisme 10. L'axe AA est l'axe d'orientation en gisement et permet de fait tourner le prisme autour de l'axe d'entrée pour l'orientation du faisceau transmis 60 en gisement. En visée zénithale, l'axe AA est parallèle à la face 112. L'angle $\alpha$ de déflexion des rayons du faisceau 50 en gisement est le même que l'angle de rotation du prisme $\alpha$ en gisement autour de l'axe AA.

Pour permettre la rotation autour des deux axes AA et BB, le biprisme est monté sur deux supports 19 recouvrant les deux faces correspondant à la base du biprisme 10. Chaque support 19 est monté à rotation dans une fourche 15 comportant deux bras 16. Un moteur d'entraînement en rotation en site est décrit dans la suite de la présente description.

Les bras 16 de la fourche 15 comportent une liaison pivot avec les supports 19 afin de permettre une rotation du biprisme 10 autour de l'axe BB entre les bras de la fourche, comme le montrent les figures 6 et 7. L'axe principal de la fourche 15 est confondu avec l'axe AA, et est donc parallèle à la base du biprisme 10. Un moteur d'entraînement en rotation en gisement permet à l'ensemble de ce mécanisme d'être entraîné autour de l'axe AA.

En pratique, la position de la lame 131 est commandée en fonction de la position angulaire du biprisme 10 selon les deux axes AA et BB de rotation du biprisme 10. En permanence, la lame 131 couvre par exemple la partie de la pupille P1 devant le prisme 11. Lorsque le biprisme 10 tourne en site d'un angle $\beta$ autour de l'axe BB, la lame 131 se déplace et suit l'arrête centrale au niveau de la face 112 du biprisme 10. A cet effet, un support 133 de la lame 131 se déplace par un déplacement linéaire CC sur une glissière 132.

Plusieurs modes de réalisation de moyens de déplacement du support de la lame 131 sont possibles.

Un premier mode de réalisation prévoit que quand le biprisme tourne pour l'orientation de faisceau en site, le support de la lame 131 est déplacé sur sa glissière 132 par une patte 14 d'entraînement.

A cet effet, la patte 14 est liée d'une part à un support 19 du biprisme par une liaison 141 et d'autre part au support 133 de la lame 131 par une liaison 134. Les liaisons 141 et 134 sont des liaisons pivot. La liaison 134 est de plus mobile en translation dans le support 133 afin de permettre le déplacement selon la direction CC sur la glissière 132. Un système mécanique de came est également possible.

Dans ce mode de réalisation de déplacement de la lame 131, le mouvement du biprisme transmis par un moteur d'entraînement en site situé sur l'axe BB ou dans la liaison 141 est également transmis à la lame 131 par l'intermédiaire de la patte 14. Réciproquement, un mouvement transmis à la lame 131 par un moteur situé près de la lame est transmis au biprisme 10 par l'intermédiaire de la patte 14.

Un deuxième mode de réalisation prévoit que l'orientation du biprisme 10 et le déplacement de la lame 131 se font par des moteurs séparés et synchronisés. Ainsi, la patte 14 n'est plus nécessaire, ce qui simplifie le montage mécanique de la tête.

Les pièces mécaniques ont des inerties réduites et une motorisation appropriée pour permettre un déplacement rapide du biprisme et de la lame.

Avantageusement, la lame et les moyens de déplacements sont équilibrés statiquement par un dispositif 135 d'équilibrage statique. Le dispositif 135 d'équilibrage statique est par exemple disposé symétriquement à la lame et ses moyens de déplacement par rapport à l'axe A-A. Le dispositif d'équilibrage permet d'éviter une déstabilisation angulaire de la ligne de visée pendant les phases de poursuite sous une excitation linéaire de la tête d'orientation de faisceau. On élimine ainsi la présence d'un éventuel balourd.

Les figures 6 et 7 montrent que le dispositif comporte un capot 17 de protection du biprisme et du reste du dispositif. Le capot 17 a sensiblement une forme hémisphérique. Il comporte principalement un matériau 18 transparent aux rayons infrarouges émis ou reçus par le dispositif de poursuite et de contre-mesure. Le matériau 18 couvre un angle minimal de 180° en site sur le capot 17 selon un plan de symétrie du capot. Le capot 17 tourne en même temps que la fourche 15 en gisement. L'ensemble du dispositif est entraîné autour de l'axe AA pour assurer le balayage en gisement.

Le dispositif est apte à effectuer la poursuite d'un missile d'une part et d'autre part effectuer la contremesure du missile. Les phases de poursuite peuvent être successives ou intermittentes selon les applications et les menaces.

La figure 8 montre que pour avoir une couverture complète de l'espace, deux dispositifs selon l'invention peuvent être montés sur deux côtés opposés d'un aéronef 1. Les dispositifs selon l'invention sont très compacts et furtifs. Ils sont mécaniquement équilibrés - cas notamment du biprisme et de la tête et de la lame - ce qui signifie qu'ils sont peu sensibles aux vibrations d'un moteur ou de pales d'un aéronef. La tête n'engendre pas elle-même de vibrations ni de déstabilisation de la ligne de visée.

On comprend que les développements qui précèdent s'appliquent à des aéronefs militaires, par exemple des avions de transport ou des hélicoptères d'attaque et de transport. Les menaces sont par exemple des missiles sol-air, air-air en engagement unique. Le cas multi menaces correspondant à un tir en salve de plusieurs missiles est également envisagé. Les développements qui précèdent peuvent également s'appliquer à des aéronefs civils, comme par exemple des avions long courrier, contre des menaces terroristes. On comprend également que les développements qui précèdent s'appliquent à d'autres types de véhicules, comme des chars ou des camions, mais également à des bâtiments civils ou militaires menacés par des missiles.

## Revendications

1. Dispositif de contre-mesure et de poursuite d'une menace sous la forme d'un missile (2) à autodirecteur, comportant une tête d'orientation apte à recevoir un faisceau (50) lumineux cohérent incident et à le dévier pour produire un faisceau (60) transmis, **caractérisé en ce que** la tête d'orientation comporte un biprisme (10) apte à diviser le faisceau transmis en deux sous faisceaux, le biprisme (10) étant associé à un dispositif (130) de retard optique apte à introduire une différence de chemin optique entre les deux sous faisceaux supérieure à la longueur de cohérence du faisceau (50) incident.

2. Dispositif selon la revendication 1, dans lequel le biprisme est monté en rotation en site autour d'un axe (BB) perpendiculaire à sa base et passant par son centre géométrique.

3. Dispositif selon la revendication 1 ou 2, dans lequel la tête est montée en rotation en gisement autour d'un axe (AA) parallèle à la base du biprisme (10) et passant par le centre géométrique du biprisme.

4. Dispositif selon l'une des revendications 1 à 3, dans lequel le dispositif (130) de retard comporte une lame (131) optique.

5. Dispositif selon la revendication 4, dans lequel la lame (131) est montée sur un support (133) mobile sur une glissière (132), le dispositif comportant des moyens de déplacement (14, 141) aptes à déplacer le support (133) de la lame sur la glissière en fonction d'une position angulaire du biprisme (10).

6. Dispositif selon la revendication 5, dans lequel les moyens de déplacement comportent une patte (14) reliée d'une part à une liaison (141) avec un support (19) du biprisme (10) et d'autre part à une liaison (134) avec le support (133) de la lame.

7. Dispositif selon la revendication 5, dans lequel les moyens de déplacement comportent un moteur d'entraînement du support (133) de la lame sur la glissière (132).

8. Dispositif selon l'une des revendications 5 à 7, comportant un dispositif (135) d'équilibrage statique de la lame et des moyens de déplacements, de manière à éviter une déstabilisation angulaire de la ligne de visée pendant les phases de poursuite sous une excitation linéaire de la tête d'orientation de faisceau.

9. Dispositif selon l'une des revendications 5 à 8, dans lequel la lame est inclinée sur son support.

10. Dispositif selon l'une des revendications 2 à 9, dans lequel le biprisme est monté sur un support (19) mobile en rotation autour de l'axe (BB) de rotation en site dans une fourche (15).

11. Dispositif selon l'une des revendications 3 à 10, dans lequel un capot (17) de protection du biprisme est monté mobile en rotation en gisement.

12. Dispositif selon l'une des revendications 1 à 11, comportant une source (5) laser infrarouge de longueur de cohérence de l'ordre de grandeur du centimètre.

**Patentansprüche**

1. Vorrichtung für eine Gegenmaßnahme und eine Verfolgung einer Bedrohung in der Form eines Zielsuchflugkörpers (2), umfassend einen Orientierungskopf, der ausgestaltet ist, einen einfallenden kohärenten Lichtstrahl (50) zu empfangen und ihn so umzulenken, dass ein weitergeleiteter Strahl (60) erzeugt wird, **dadurch gekennzeichnet, dass** der Orientierungskopf ein Doppelprisma (10) umfasst, das ausgestaltet ist, den weitergeleiteten Strahl in zwei Unterstrahlen zu teilen, wobei das Doppelprisma (10) mit einer optischen Verzögerungsvorrichtung (130) verbunden ist, die ausgestaltet ist, eine optische Wegdifferenz zwischen den zwei Unterstrahlen oberhalb einer Kohärenzlänge des einfallenden Strahls (50) einzufügen.

2. Vorrichtung nach Anspruch 1, in der das Doppelprisma vertikal drehend um eine Achse (BB) befestigt ist, die rechtwinklig zu seiner Basis ist und durch sein geometrisches Zentrum verläuft.

3. Vorrichtung nach einem der Ansprüche 1 oder 2, in der der Kopf horizontal drehend um eine Achse (AA) gelagert ist, die parallel zu der Basis des Doppelprismas (10) ist und durch das geometrische Zentrum des Doppelprismas verläuft.

4. Vorrichtung nach einem der Ansprüche 1 bis 3, in der die Verzögerungsvorrichtung (130) eine optische Blende (131) umfasst.

5. Vorrichtung nach Anspruch 4, in der die Blende (131) auf einem beweglichen Lager (133) auf einer Gleitführung (132) befestigt ist, wobei die Vorrichtung Verlagerungsmittel (14, 141) umfasst, die ausgestaltet sind, das Lager (133) der Blende auf der Gleitführung in Abhängigkeit von einer Winkelposition des Doppelprismas (110) zu verlagern.

6. Vorrichtung nach Anspruch 5, in der die Verlagerungsmittel eine Lasche (14) umfassen, die einerseits mit einer Verbindung (140) mit einem Lager (19) des Doppelprismas (10) verbunden ist und andererseits mit einer Verbindung (134) mit dem Lager (133) der Blende verbunden ist.

7. Vorrichtung nach Anspruch 5, in der die Verlagerungsmittel einen Antriebsmotor des Lagers (133) der Blende über der Gleitführung (132) umfassen.

8. Vorrichtung nach einem der Ansprüche 5 bis 7, umfassend eine statische Ausgleichsvorrichtung (135) der Blende und Verlagerungsmittel zum Vermeiden einer Winkeldestabilisierung der Visierlinie während der Verfolgungsphasen unter einer linearen Auslenkung des Strahlorientierungskopfes.

9. Vorrichtung nach einem der Ansprüche 5 bis 8, in der die Blende über ihre Lagerung geneigt ist.

10. Vorrichtung nach einem der Ansprüche 2 bis 9, in der das Doppelprisma auf einem beweglichen Lager (19) drehend um die vertikale Drehachse (BB) in einem Gabelstück (15) befestigt ist.

11. Vorrichtung nach einem der Ansprüche 3 bis 10, in der eine Schutzhaube (17) des Doppelprismas horizontal drehend befestigt ist.

12. Vorrichtung nach einem der Ansprüche 1 bis 11, umfassend eine Infrarotlaserquelle (5) mit einer Kohärenzlänge in der Größenordnung von einem Zentimeter.

## Claims

1. A device to counter and track a threat in the form of a missile (2) with a homing device, including a homing head designed to receive a coherent incident light beam (50), and to re-direct the latter in order to produce a transmitted beam (60), **characterized in that** the homing head includes a double prism (10) able to divide the transmitted beam into two sub-beams, with the double prism (10) being associated with an optical delay device (130) able to insert an optical path difference, between the two sub-beams, that is greater than the coherence length of the incident beam (50).

2. The device according to claim 1, wherein the double prism is mounted to rotate in elevation around an axis (BB) perpendicular to its base and passing through its geometric center.

3. The device according to claim 1 or 2, wherein the head is mounted to rotate in horizontal bearing around an axis (AA) parallel to the base of the double prism (10) and passing through the geometric center of the double prism.

4. The device according to one of claims 1 to 3, wherein the delay device (130) includes an optical blade (131).

5. The device according to claim 4, wherein the blade (131) is mounted on a mobile support (133) on a slide (132), where the device includes movement means (14, 141) designed to move the support (133) of the blade on the slide as a function of an angular position of the double prism (10).

6. The device according to claim 5, wherein the movement means include a bracket (14) connected firstly to a link (141) with a support (19) of the double prism (10) and secondly to a link (134) with the support (133) of the blade.

7. The device according to claim 5, wherein the movement means include a motor for driving the support (133) of the blade on the slide (132).

8. The device according to one of claims 5 to 7, including a static device (135) for balancing the blade and the movement means in order to avoid angular destabilisation of the sighting line during the tracking phases by linear excitation of the beam homing head.

9. The device according to one of claims 5 to 8, wherein the blade is inclined on its support.

10. The device according to one of claims 2 to 9, wherein the double prism is mounted on a mobile support (19) to rotate around the axis (BB) of rotation in elevation in a fork (15).

11. The device according to one of claims 3 to 10, wherein a cover (17) for protection of the double prism is rotatably mounted in bearing.

12. The device according to one of claims 1 to 11, including an infrared laser source (5) with a coherence length of the order of one centimeter.

FIG. 1

FIG. 2

FIG. 5C

FIG. 5D

**FIG. 3A**

**FIG. 3B**

**FIG. 4**

**FIG. 5A**

**FIG. 5B**

FIG. 6

FIG. 7

FIG. 8

**EP 1 861 676 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2535467